# EUROPEAN PATENT SPECIFICATION

(11) **EP 3 895 397 B1**
(45) Date of publication and mention of the grant of the patent: **04.01.2023**
(21) Application number: 19809115.9
(22) Date of filing: 02.12.2019
(51) Int. Cl.: H04L 69/08, H04L 69/18

(54) **METHOD AND SYSTEM FOR TRANSMITTING A CROSS-PROTOCOL MESSAGE**
VERFAHREN UND SYSTEM ZUM ÜBERTRAGEN EINER PROTOKOLLÜBERGREIFENDEN NACHRICHT
PROCÉDÉ ET SYSTÈME DE TRANSMISSION D'UN MESSAGE INTERPROTOCOLE

(30) Priority: 13.12.2018 EP 18212281
(43) Date of publication of application: 20.10.2021
(73) Proprietor: Technische Universität Graz, 8010 Graz (AT)
(72) Inventor: HOFMANN, Rainer, 8010 Graz (AT); BOANO, Carlo Alberto, 8010 Graz (AT); ROEMER, Kay Uwe, 8042 Graz (AT)
(74) Representative: Weiser & Voith Patentanwälte Partnerschaft
(86) International application number: PCT/EP2019/083298
(87) International publication number: WO 2020/120195

(56) References cited:
- US-A1- 2018 352 055
- KAMESWARI CHEBROLU ET AL: "Esense", NATIONAL LAB FOR INFORMATION SCIENCE AND TECHNOLOGY/ MOBICOM'09, ACM, BEIJING,CHINA, 20 September 2009 (2009-09-20), pages 85-96, XP058288598, DOI: 10.1145/1614320.1614330 ISBN: 978-1-60558-702-8 cited in the application

## Description

The present invention relates to a method for transmitting an arbitrary cross-protocol message from a first communication device, which is configured to transmit first messages according to a first communication protocol in a first frequency channel, to a second communication device, which is configured to receive second messages according to a second communication protocol in a second frequency channel overlapping the first frequency channel, wherein each first message is transmitted as a carrier burst modulated according to a first modulation type and each second message is transmitted as a carrier burst modulated according to a second modulation type differing from the first modulation type. In further aspects, the invention relates to a first and a second communication device performing said method.

Inter alia due to miniaturisation in the past decades, the number of globally deployed electronic devices that are capable of communication, i.e., communication devices, has been and continues to be rising substantially. Such electronic devices are, e.g., computers and controllers of many kinds, handheld devices like mobile phones or digital assistants, sensors (e.g., temperature, proximity, glass breakage sensors etc.), medical devices, industrial or home automation devices, scientific equipment, nowadays even electronic door locks, light switches or light bulbs etc., which are interconnected by wire or wirelessly for automation, control or simply communication purposes. Apart from communicating with each other, a majority of these electronic devices is connected to the internet, creating the Internet of Things (IoT).

Particularly in the fast growing field of wireless communication, a large variety of different communication protocols has been developed and standardised. While some communication protocols use dedicated frequency bands and/or channels for transmission, many others share a few (mostly unlicensed) frequency bands, e.g., the Industrial, Scientific, and Medical (ISM) frequency bands, and often use overlapping frequency channels. In this context, overlapping frequency channels mean a partial mutual overlapping, an inclusion of one frequency channel in the other, or an identity of the frequency channels.

However, the transmission of messages between communication devices that transmit and receive messages according to different communication protocols is at least difficult, often impossible, even if the frequency channels overlap. This is particularly true in cases where the two communication devices transmit carrier bursts that are modulated according to different modulation types, i.e., differ in the respective physical layers of the communication protocols. While transmission of some specific (meta-)information, e.g., a heartbeat or sign of life, might be possible over such a physical barrier, a direct transmission of arbitrary messages, i.e., messages containing data that is not limited but can be freely chosen, is physically prohibited by the different modulations. For example, popular communication standards like IEEE 802.11 (e.g. WiFi^{®}), IEEE 802.15.4 (e.g. ZigBee^{®}) or Bluetooth^{®} Low Energy (BLE), modulate the carrier bursts by Orthogonal Frequency-Division Multiplexing (OFDM), Offset Quadrature Phase-Shift Keying (OQPSK), and Gaussian Frequency-Shift Keying (GFSK), respectively, and have overlapping frequency channels in the globally unlicensed 2,4 GHz frequency band. Hence, transmitting an arbitrary cross-protocol message from a first communication device using one of these popular standards to a second communication device using a different one of these standards is not readily possible.

To overcome this drawback, it has been proposed by Chi Z. et al., B2W2: N-Way Concurrent Communication for IoT Devices, Proceedings of the 14th ACM Conference on Embedded Network Sensor Systems, SenSys '16, pp. 245-258, ACM 2016, to create a sine wave by directly adjusting transmission power level of adjacent carrier bursts in a BLE device and encode, into the frequency of the sine wave, a cross-protocol message that can be decoded by Channel State Information (CSI) of a WiFi device. However, this communication is limited to unidirectional transmission of cross-protocol messages from the BLE to the WiFi device. Moreover, the power level of a BLE carrier burst can only be detected upon collision with a WiFi carrier burst, which constitutes a fundamental discrepancy to the standard collision avoidance mechanisms of BLE.

Kim S. et al., FreeBee: Cross-Technology Communication via Free Side Channel, Proceedings of the 21st Annual International Conference on Mobile Computing and Networking, MobiCom '15, pp. 317-330, ACM, 2015, propose to slightly shift existing periodic beacon frames for direct communication between WiFi, ZigBee, and BLE to create a Pulse Position Modulation (PPM). While allowing for bidirectional communication between WiFi and ZigBee devices, this approach requires a particularly low noise frequency channel and achieves only a very low data rate of about 30 bps (bits per second).

Jiang W. et al., BlueBee: 10,000x faster Cross-Technology Communication from Bluetooth to ZigBee, November 2017, SenSys'17, November 6-8, 2017, Delft, Netherlands, describe a method for transmitting cross-protocol messages from BLE to ZigBee devices by encapsulating ZigBee frames within BLE carrier bursts, which is possible due to similarities of the ZigBee and the BLE modulations, the flexibility, and the high error tolerance of the ZigBee demodulation. However, this method cannot be generally applied to devices using other communications standards and in particular cannot even be used for returning a cross-protocol message from the ZigBee to the BLE device, i.e., this method is merely applicable to unidirectional cross-protocol messages from BLE to ZigBee devices.

For cross-protocol messages in the reverse direction, Jiang W. et al., Achieving Receiver-Side Cross-Technology Communication with Cross-Decoding, November 2018, MobiCom'18, October 29 - November 2, 2018, New Dehli, India, propose to enhance a BLE receiver to cross-decode a received ZigBee message by analysing left and right sample offsets of the received signal to recover the transmitted message. This method, again, makes use of specific similarities of the ZigBee and the BLE modulations and is merely applicable to unidirectional cross-protocol messages from ZigBee to BLE devices.

It is an object of the present invention to provide a method for transmitting an arbitrary cross-protocol message which achieves a feasible data rate without modification of existing standards and which is flexible in use to be applied in both directions between communication devices using different communication protocols.

According to a first aspect of the invention, this object is achieved by a method of the type mentioned in the outset for transmitting an arbitrary cross-protocol message, which method comprises:
in the first communication device,
encoding the cross-protocol message by a series of durations, adding a characteristic preamble of durations to said series, and
transmitting a sequence of first message carrier bursts the lengths of which and/or of gaps between which correspond to the durations in said series;
in the second communication device,
receiving said sequence and, upon detection of said preamble by means of received signal strength measurements, determining the lengths of the subsequent first message carrier bursts and/or of the gaps therebetween by means of received signal strength measurements,
reconstructing the series of durations from said determined lengths, and
decoding the cross-protocol message from the reconstructed series.

Any arbitrary cross-protocol message can thereby be transmitted from the first to the second communication device. The achievable data rate depending on the actually used communication devices and protocols is in the range of several kilobits per second. While this data rate is lower than the typically achievable data rate of intra-protocol messages between communication devices of one and the same communication protocol, it is still satisfactory for - mostly more sporadic - cross-protocol messages.

Using received signal strength measurements, e.g., a Received Signal Strength Indicator (RSSI), is common in communication devices, e.g., for determining a channel occupancy, particularly in communication devices transmitting in unlicensed frequency bands. Moreover, communication protocols generally provide for variable gap lengths between the carrier bursts of a sequence and/or for variable message lengths and, consequently, for variable carrier burst lengths of a sequence. Hence, the method can be flexibly applied to communication devices transmitting and receiving messages according to a multitude of different communication protocols. Thereby, the method is perfectly suitable for bidirectional cross-protocol messages without any modification of standards.

It shall be noted that the present method is not limited to wireless communication but can likewise be applied to wired communication. It shall further be noted that Chebrolu K. et al., Esense: Communication through energy sensing, Proceedings of the 15th Annual International Conference on Mobile Computing and Networking, MobiCom '09, pp. 85-96, ACM, September 2009 proposed to use energy burst duration measurement for transmitting specifically predefined commands from a WiFi device to a ZigBee device; however, that method does not allow for arbitrary cross-protocol messages.

In one embodiment, the message is binary encoded by the durations, i.e., each duration in said series of durations matches one of a set of 2 different predetermined durations. This allows for a distinct, straightforward differentiation between each of the predetermined durations. However, in an advantageous embodiment of the method, each duration in said series of durations matches one of a set of 4 different predetermined durations. Thereby, the data rate is increased while the differentiation between each of the predetermined durations is still simple, which helps avoiding ambiguity during decoding.

In a favourable alternative thereto, each duration in said series of durations matches one of a set of 16 different predetermined durations. Thereby, a hexadecimal encoding of the cross-protocol message is achieved such that each byte thereof can be encoded by the lengths of only two energy bursts or two gaps therebetween or by the lengths of one burst and one gap. Due to the lower total number of required energy bursts and gaps in each sequence, the data rate is further increased and transmission time can be saved.

As either the first message carrier bursts or the gaps between first message carrier bursts or both the first message carrier bursts and the gaps therebetween may correspond to the durations in said series of durations, different variants are available. In case only the lengths of the gaps between the first message carrier bursts correspond to the durations in said series, the implementation of such variable gap length is easy. When, alternatively, the lengths of both the first message carrier bursts and the gaps between the first message carrier bursts correspond to the durations in said series, the transmission of cross-protocol messages is efficient. However, in case only the lengths of the first message carrier bursts in said sequence correspond to the durations in said series of durations, the gaps between the first message carrier bursts in said sequence favourably have one and the same predetermined length. Unintended carrier bursts potentially transmitted by third party communication devices in the same frequency channel can be avoided by predetermining sufficiently short gaps. Hence, the first communication device has full control of the transmitted first message carrier bursts in the frequency channel. Furthermore, the length of the gaps can be predetermined such that the second communication device reliably interprets consecutively received first message carrier bursts as being both separate from each other and related to the same sequence. The lengths of the first message carrier bursts is simply varied by the variable lengths of the first messages.

It is particularly advantageous when said cross-protocol message comprises a header, payload data, and an optional checksum. Decoding efforts and energy can be saved by introducing a header which comprises, e.g., the number of bytes of the cross-protocol message, an identifier of a network the cross-protocol message is aimed at, an address of an intended receiver of the cross-protocol message, and/or a transmitter address etc. The optional checksum ensures the integrity of the transmitted cross-protocol message.

While the present method may be applied to any communication device, e.g., in the field of industrial, scientific or medical communication, utilising a suitable communication protocol as known in the art, it is favourable when the first communication protocol is one of the standards IEEE 802.11, IEEE 802.15.4, Bluetooth, and Bluetooth Low Energy and the second communication protocol is a different one of the standards IEEE 802.11, IEEE 802.15.4, Bluetooth, and Bluetooth Low Energy. Components using these communication protocols are ubiquitous; the present method can thereby be widely deployed.

According to a second aspect, the invention provides for a communication device for transmitting an arbitrary cross-protocol message, i.e., a first communication device, which communication device is configured to transmit first messages according to a first communication protocol in a first frequency channel, wherein each first message is transmitted as a carrier burst modulated according to a first modulation type, and
wherein the communication device is further configured to
- encode the cross-protocol message by a series of durations,
- add a characteristic preamble of durations to said series, and
- transmit a sequence of first message carrier bursts the lengths of which and/or of gaps between which correspond to the durations in said series.

According to a third aspect, the invention provides for a communication device for receiving an arbitrary cross-protocol message, i.e., a second communication device, which communication device is configured to receive second messages according to a second communication protocol in a second frequency channel, wherein each second message is transmitted as a carrier burst modulated according to a second modulation type, and
wherein the communication device comprises a received signal strength measurement unit and is further configured to
- receive a sequence of first message carrier bursts modulated according to a first modulation type differing from the second modulation type, the lengths of which first message carrier bursts and/or of gaps therebetween correspond to durations in a series by which the cross-protocol message has been encoded and to which a characteristic preamble of durations has been added,
- determine, upon detection of said preamble by means of received signal strength measurement, the lengths of the subsequent first message carrier bursts and/or of the gaps therebetween by means of received signal strength measurement,
- reconstruct the series of durations from said determined lengths, and
- decode the cross-protocol message from the reconstructed series.

With respect to further embodiments of the abovementioned communication devices and the advantages thereof it is referred to the above description of the method.

The invention shall now be explained in more detail below on the basis of exemplary embodiments thereof with reference to the accompanying drawings, in which:
Fig. 1 shows a communication area with a first communication device transmitting a cross-protocol message to a second communication device according to the invention in a schematic overview;
Fig. 2 shows a comparison of frequency channels used by different communication devices in a frequency diagram;
Fig. 3 shows a method for transmitting the cross-protocol message according to Fig. 1 in a flow chart;
Figs. 4a to 4c show a first sequence of carrier bursts of different lengths transmitted by the first communication device of Fig. 1 in its entirety (Fig. 4a) and as a starting first (Fig. 4b) and a remaining second (Fig. 4c) subsequence thereof in respective timing diagrams;
Figs. 5a and 5b show, as alternatives to the example of Fig. 4c, the subsequence having gaps of different lengths between the carrier bursts (Fig. 5a) and the subsequence having both carrier bursts and gaps therebetween of different lengths (Fig. 5b) in respective timing diagrams;
Figs. 6a to 6e show a second sequence of carrier bursts of the first communication device of Fig. 1 in its entirety (Fig. 6a) and as a starting first (Fig. 6b) and remaining second (Fig. 6c), third (Fig. 6d) and forth (Fig. 6e) subsequence thereof in respective timing diagrams; and
Figs. 7a and 7b show a single first message carrier burst of a first communication device (Fig. 7a) and a received signal strength measurement of the carrier burst received by a second communication device (Fig. 7b) in respective timing diagrams.

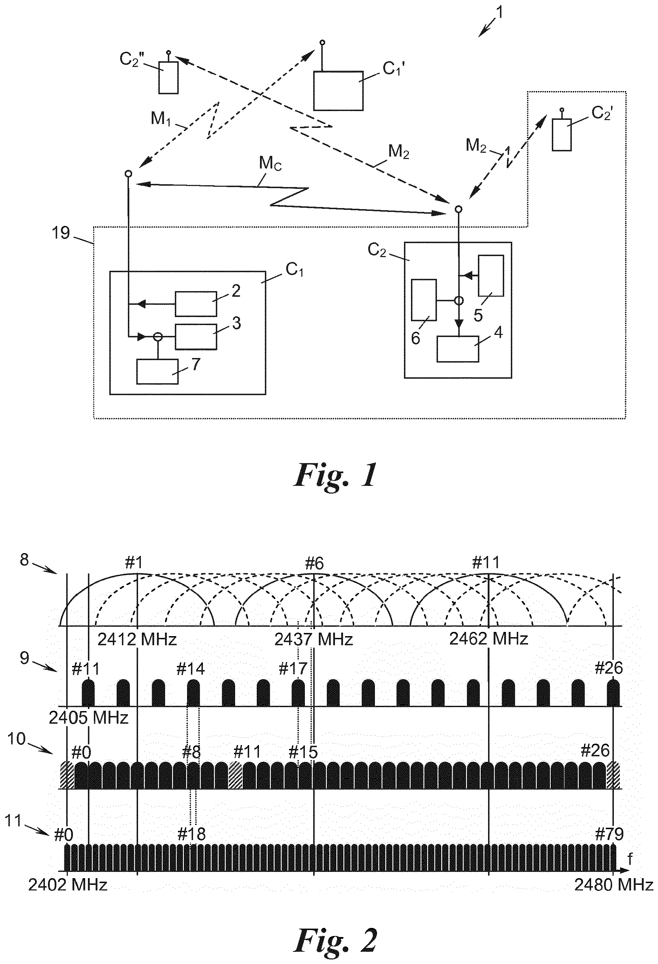

Fig. 1 shows an example of a communication area 1 which comprises a first communication device C₁ and a second communication device C₂. The first communication device C₁ is configured to transmit first messages M₁ according to a first communication protocol to other first communication devices (here: one other first communication device) C₁' in the communication area 1. The first communication protocol is one of the standards IEEE 802.11, IEEE 802.15.4, Bluetooth^{®}, and Bluetooth^{®} Low Energy (BLE) or another standard as known in the art. In the present example, the first communication protocol is of the ZigBee^{®} standard which is based on IEEE 802.15.4.

The first communication device C₁ has a transmitter 2 for transmitting the first messages M₁ and - optionally - a receiver 3 for receiving first messages M₁ from the other first communication device C₁'.

The second communication device C₂ is configured to receive second messages M₂ according to a second communication protocol from other second communication devices (here: two other second communication devices) C₂', C₂" in the communication area 1. The second communication protocol is a different one of the standards IEEE 802.11, IEEE 802.15.4, Bluetooth^{®}, and BLE or another standard as known in the art. In the present example, the second communication protocol is of the BLE standard.

For receiving the second messages M₂, the second communication device C₂ has a receiver 4 and, for transmitting second messages M₂, an optional transmitter 5. Furthermore, the second communication device C₂ has a received signal strength measurement unit 6 for measuring the received signal strength, e.g., a Received Signal Strength Indicator (RSSI). Optionally, the first communication device C₁ also comprises a received signal strength measurement unit 7.

Other components of the first and second communication devices C₁, C₂ are not depicted in Fig. 1. At least some of the first and/or second communication devices C₁, C₁', C₂, C₂', C₂" optionally include one or more of a sensor, a human-machine interface (HMI), e.g., an optical or acoustical output unit and/or an input unit, an actuator, a controller, e.g., for a heater or air conditioner, an electronic door lock, light switch or light bulb, an interface to a different communication device or network, etc. Moreover, at least one of the communication devices C₁, C₁', C₂, C₂', C₂" may optionally be a computer, a mobile phone or the like.

Fig. 2 shows a comparison of frequency bands 8, 9, 10, 11 used according to (from top to bottom in Fig. 2) the IEEE 802.11, the IEEE 802.15.4, the BLE, and the Bluetooth^{®} standards, respectively, in the 2.4 GHz frequency range. The first communication device C₁ transmits its first messages M₁ in a first frequency channel, e.g., in the first frequency channel marked "#17" in the frequency band 9 of the IEEE 802.15.4 (here: ZigBee) standard in Fig. 2. The second communication device C₂ receives its second messages M₂ in a second frequency channel, e.g., in the second frequency channel marked "#15" in the frequency band 10 of the BLE standard in Fig. 2. The second frequency channel marked "#15" overlaps the first frequency channel marked "#17". However, other frequency channels or frequency ranges may be used.

The term "overlapping" in this context means either partial mutual overlapping, as in this example, or an inclusion of one frequency channel in the other (e.g., as the Bluetooth frequency channel marked "#18", which is included in the BLE frequency channel marked "#8", or the BLE frequency channel marked "#15" which is included in the IEEE 802.11 frequency channel marked "#6"), or an identity, e.g., as the IEEE 802.15.4 frequency channel marked "#14" and the BLE frequency channel marked "#8".

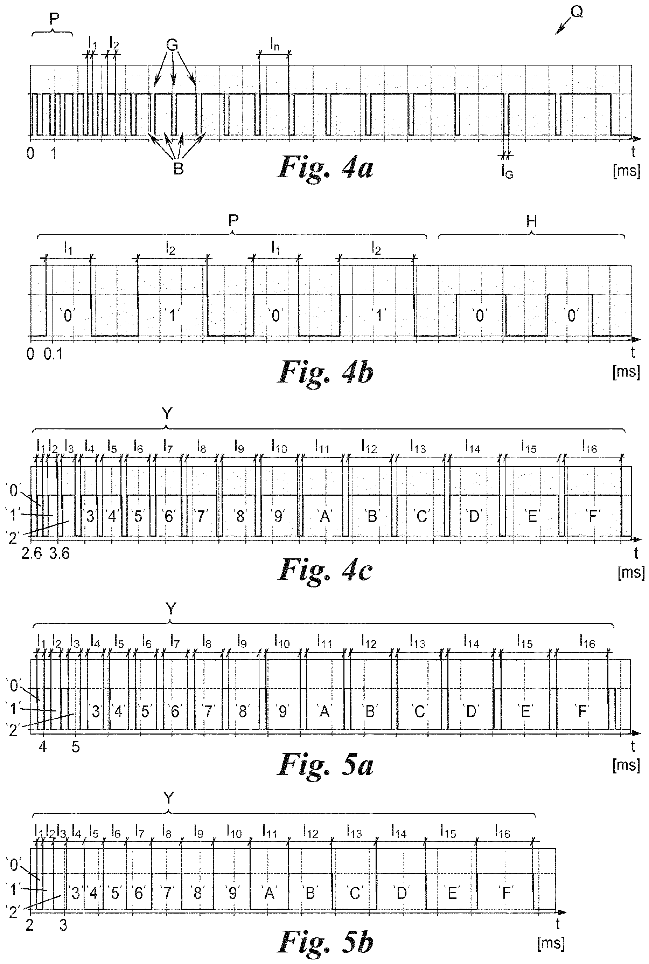

Referring to Fig. 1, each first message M₁ is transmitted as a carrier burst B (Fig. 4a) modulated according to a first modulation type and each second message M₂ is transmitted as a carrier burst B modulated according to a second modulation type differing from the first modulation type. Hence, the first and second communication protocols differ in their respective physical layers, i.e., in the lowest communication layer of the respective protocols. For this reason, a direct transmission of an arbitrary cross-protocol message M_{C}, i.e., a message including any arbitrary payload data Y (Fig. 4c), from the first communication device C₁ to the second communication device C₂ is prohibited by their different modulation types.

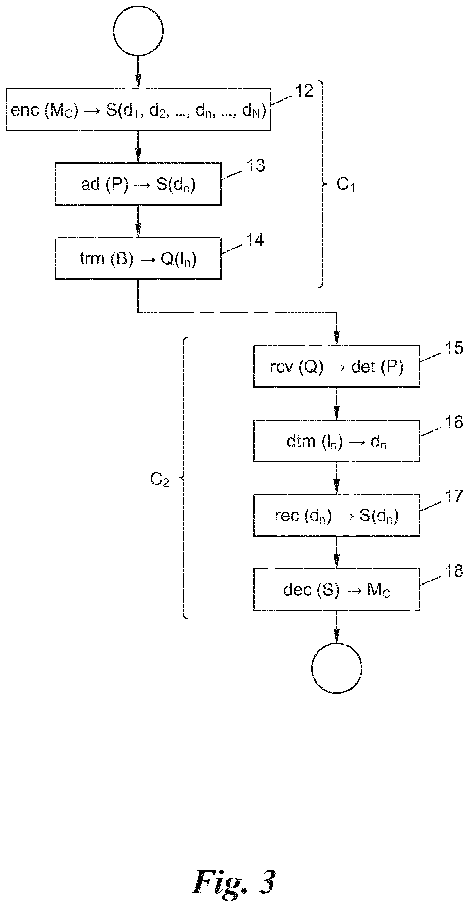

To overcome this restriction, Fig. 3 shows that the first communication device C₁ encodes, in step 12, the cross-protocol message M_{C} by a series S of durations d₁, d₂, ..., d_{N}, generally dₙ, with N being the number of possible different durations dₙ - not the number of elements - in the series S; hence, the series S usually has more or less than N elements, each element being a duration dₙ of the N different durations dₙ, as will be explained in greater detail below with reference to Fig. 4c.

In step 13, a characteristic preamble P of durations dₙ is added to said series S, i.e., at the beginning thereof.

Thereafter in step 14, the first communication device C₁ transmits first messages M₁ as a sequence Q of first message carrier bursts B, each of which carrier bursts B is modulated according to the first modulation type. The lengths l₁, l₂, ..., l_{N}, generally lₙ, of each first message carrier burst B and/or of the gaps G between the carrier bursts B of the sequence Q correspond to the durations dₙ of the series S of durations dₙ, as will be explicated in detail below with reference to Figs. 4c, 5a and 5b. Hence, the sequence Q comprises the same number of carrier bursts B and/or gaps G, respectively, as the number of durations dₙ comprised in the series S, and the length lₙ of each carrier burst B and/or of each gap G in the sequence Q correspond to the respective duration dₙ, i.e., its magnitude, in the series S.

It shall be noted that the first communication device C₁ transmits first messages M₁ either ordinarily to other first communication devices C₁' or as the sequence Q of first message carrier bursts B encoding a cross-protocol message M_{C}. To the other first communication devices C₁' in the communication area 1, the first messages M₁ of a cross-protocol message M_{C} are usually, though not necessarily, without a meaning, e.g., not addressing any other first communication device C₁' in the communication area 1 or without (meaningful) data content, as the first communication device C₁ selects first messages M₁ for a cross-protocol message M_{C} according to the lengths lₙ of the first message carrier bursts B required in the sequence Q.

In the example shown in Figs. 4a to 4c, the lengths lₙ of only the first message carrier bursts B in the sequence Q correspond to the durations dₙ in the series S of durations dₙ and the gaps G between the first message carrier bursts B in said sequence Q optionally have one and the same predetermined length l_{G} (here: about 200µs). This predetermined gap length l_{G} is long enough that the second communication device C₂ can reliably distinguish between consecutive first message carrier bursts B and is short enough that the second communication device C₂ interprets consecutive first message carrier bursts B as belonging to the same sequence Q - not mistaking carrier bursts from other communication devices as belonging to the same sequence Q - and that unintended use of the frequency channel by other communication devices can be detected.

Alternatively, as shown in the examples of Figs. 5a and 5b for slightly different durations dₙ, either the lengths lₙ of only the gaps G in the sequence Q (Fig. 5a) or the lengths lₙ of both the first message carrier bursts B and the gaps G therebetween (Fig. 5b) can be varied to correspond to the durations dₙ in the series S of durations dₙ. Hence, in the case of Fig. 5a, the first message carrier bursts B may optionally have one and the same predetermined length.

Referring to Fig. 3, steps 12 to 14 (on the left side) are performed by the first communication device C₁, the following ones (on the right side) are performed by the second communication device C₂. The second communication device C₂ receives, in step 15, the sequence Q of first message carrier bursts B. By means of received signal strength measurement by the received signal strength measurement unit 6, the second communication device C₂ detects the characteristic preamble P in said sequence Q, thereby distinguishing the cross-protocol message M_{C} from ordinary first messages M₁ transmitted from the first communication device C₁ to other first communication devices C₁'.

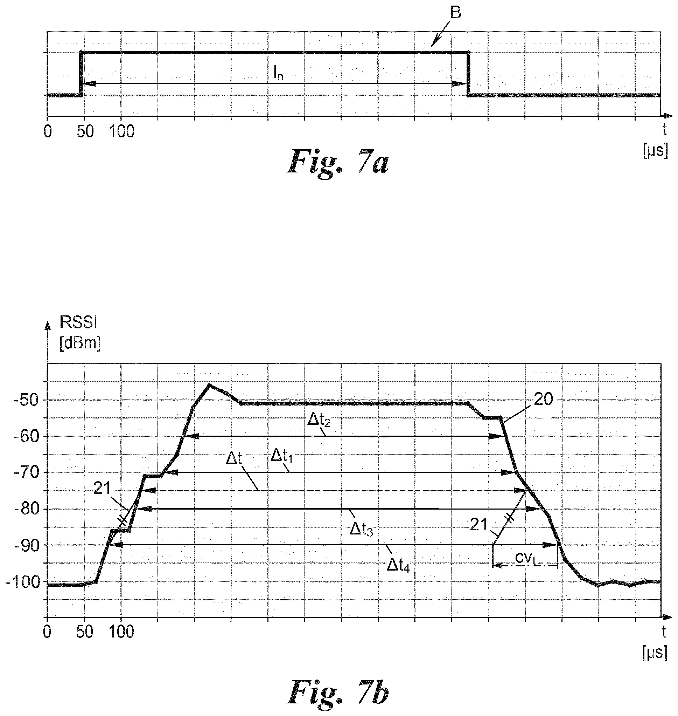

Upon detection of the preamble P, the second communication device C₂ determines the lengths lₙ of the first message carrier bursts B and/or of the gaps G therebetween subsequent to the preamble P in step 16. This is again performed by means of the received signal strength measurement, as will be explicated in greater detail with respect to Fig. 7b below.

In step 17, the second communication device C₂ reconstructs the series S of durations dₙ from the determined lengths lₙ of the first message carrier bursts B and/or of the gaps G received subsequently to the preamble P. In final step 18, the cross-protocol message M_{C} is decoded from the reconstructed series S.

In the example of Fig. 4c, each duration dₙ in said series S of durations dₙ matches one of a set of N = 16 different predetermined durations dₙ, i.e., the set comprises a total of 16 different durations d₁, ..., d₁₆, resulting in 16 corresponding different lengths l₁, ..., l₁₆ of only the first message carrier bursts B. The series S is thereby hexadecimally coded; for example, the value '0' may be coded by the shortest first message carrier burst B (of the length l₁), the value '1' by the second shortest (of the length l₂) etc. up to the value 'F' being coded by the longest first message carrier burst B (of the length l₁₆) as depicted in Fig. 4c. Thereby, each byte of information can be transmitted by two first message carrier bursts B.

Moreover, the characteristic preamble P is a subsequence {0, 1, 0, 1} of the sequence Q; it is understood that a characteristic preamble P which has different durations and/or is composed of a different number of first message carrier bursts B than shown in the example of Figs. 4a and 4b may be employed. The cross-protocol message M_{C} starts with an optional header H (here: {0, 0}) and the remainder of the cross-protocol message M_{C} (Fig. 4c) is the actual payload data Y (here: a subsequence {0, 1, 2, 3, 4, 5, 6, 7, 8, 9, A, B, C, D, E, F} of first message carrier bursts B of the 16 different lengths lₙ corresponding to the N = 16 predetermined durations d₁, ..., d₁₆ in ascending order), see Figs. 4a, 4b and 4c.

Fig. 5a shows an example where the same payload data Y, i.e., the subsequence {0, 1, ..., F}, is represented by the different lengths lₙ of only the gaps G between the first message carrier bursts B. Moreover, in the example of Fig. 5c, the same payload data Y, i.e., the subsequence {0, 1, ..., F}, is represented by the different lengths lₙ of both the first message carrier bursts B and the gaps G therebetween, which results in a shorter total message length as compared to the examples of Figs. 4c and 5a. It shall be understood that the payload data Y may alternatively include more or less than 16 first message carrier bursts B or 8 bytes.

In alternative embodiments, each duration dₙ in said series S of durations dₙ matches one of a set of a different number N of predetermined durations dₙ, e.g., of N = 2 different predetermined durations dₙ resulting in binary coding or of N = 4 different predetermined durations dₙ resulting in an efficient, though easy-to-distinguish coding.

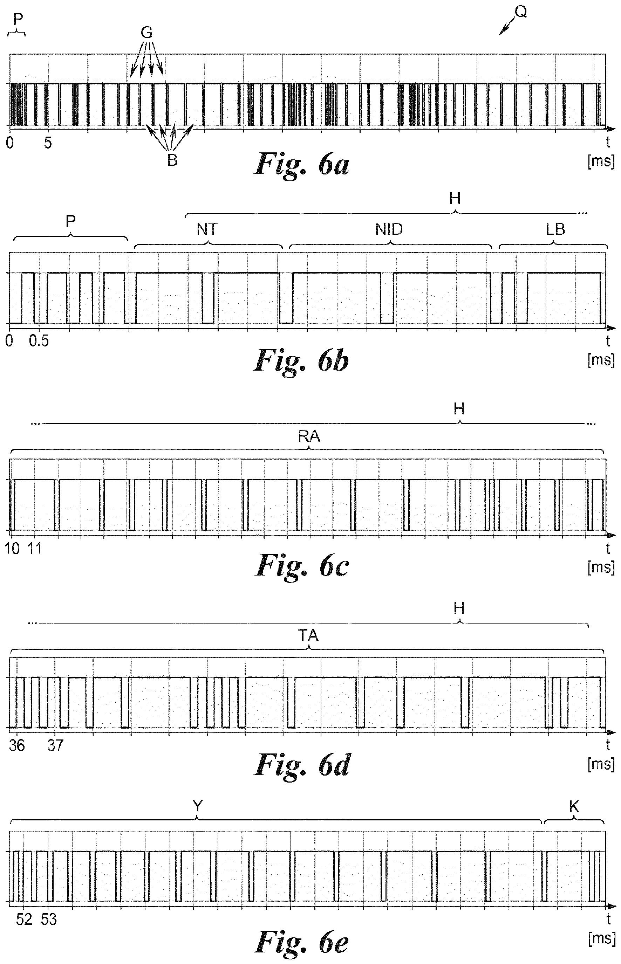

Fig. 6a shows a different example of a cross-protocol message M_{C} transmitted as a sequence Q of hexadecimally coded first message carrier bursts B, details of which are illustrated in Figs. 6b to 6e. The sequence Q of this example comprises the same preamble P {0, 1, 0, 1} as in the example of Fig. 4a. The cross-protocol message M_{C} of the sequence Q starts with the header H, followed by the payload data Y (Fig. 6e: the same subsequence {0, 1, ..., F} as in the example of Figs. 4a and 4c) and an optional checksum K (Fig. 6e: {C, 0}). In this example, the header H comprises a notifier NT and the following optional further header H components, the presence or absence of which is individually indicated by the notifier NT; for illustration purpose, all components are indicated by the notifier NT (Fig. 6b: {7, 7}) and included in the header H in this example:
- a network identifier NID (Fig. 6b: {A, B}), identifying a predefined network of communication devices C₁, C₂, e.g., a network 19 (dotted lines in Fig. 1), excluding other communication devices from the cross-protocol message M_{C};
- a length byte LB (Fig. 6b: {0, 8}), indicating the number of bytes of the payload data Y;
- a receiver address RA (Fig. 6c: {C, C, 7, 8, A, B, F, F, F, E, 7, 0, 6, 8, 8, 2}), indicating the unique address of the receiver of the cross-protocol message M_{C}; and
- a transmitter address TA (Fig. 6d: {0, 0, 1, 2, 4, B, 0, 0, 0, 7, B, 5, A, E, 0, 5}), indicating the unique address of the transmitter of the cross-protocol message M_{C}.

On the basis of Figs. 7a and 7b, different ways of determining the lengths lₙ of the first message carrier bursts B and/or of the gaps G therebetween shall now be exemplified for detecting the preamble P and reconstructing the series S of durations dₙ.

Fig. 7a shows a single transmitted first message carrier burst B of a length lₙ. Fig. 7b shows an example progression 20 of the received signal strength measured by the received signal strength measurement unit 6 of the second communication device C₂ (here: a second communication device C₂ according to the IEEE 802.15.4 standard) as power over time. Due to sampling periods of the received signal strength measurement unit 6, noise in the frequency channel and differences in received signal strength measurement, e.g., averaging as specified by some communication standards, the edges of the progression 20 are more or less time-delayed (here: 128 µs according to the IEEE 802.15.4 standard), inclined and/or uneven. Hence, the determination of the lengths lₙ of the first message carrier bursts B in step 16 is not trivial.

A first variant to determine the length lₙ of a first message carrier burst B is to measure a time span Δt during which the progression 20 exceeds a predetermined (usually: medium) power level, e.g. -75 dBm. This is straightforward and quick. However, the accuracy very much depends on the noise in the frequency channel, the peak received signal strength which itself depends, inter alia, on the distance to the first communication device C₁ etc. As can be seen in Fig. 7b, when taking -70 dBm as the predetermined power level instead of -75 dBm, the resulting time span measure changes from about Δt = 550 µs to about Δt₁ = 475 µs such that a decoding error is rather likely.

This can be improved in a second variant by introducing a correction value cvₜ which is positive or negative. In the example of Fig. 7b a time span Δt₄ measured at a predetermined power level of -90 dBm is corrected by the negative correction value cvₜ to the corrected time span (here: Δt) according to Δt = Δt₄ - cvₜ, depicted by the parallel lines 21. The correction value cvₜ can be determined by initially measuring one or more first message carrier bursts B of known length(s) lₙ, e.g., of the preamble, and using the difference between the known length(s) lₙ and the measured time span as the correction value cvₜ.

In an alternative third variant, the power level is predetermined in that multiple time spans Δt₁, Δt₂, Δt₃, Δt₄, ... at different power levels, e.g., -60 dBm, -70 dBm, -80 dBm and -90 dBm are measured for one or more first message carrier bursts B of known length(s) lₙ, e.g., of the preamble. Thereupon, that power level is chosen as the predetermined power level, at which the measured time span Δt₁, Δt₂, Δt₃, At₄, ... yields the best match for the known length(s) lₙ.

In an alternative fourth variant, the length lₙ of each first message carrier burst B is determined as an average of multiple time spans Δt₁, Δt₂, Δt₃, Δt₄, ... during which the progression 20 exceeds different predetermined power levels, e.g., -60 dBm, -70 dBm, -80 dBm and -90 dBm. While being more complex, this variant results in a very accurate determination of the length lₙ of the first message carrier burst B and thus in a high accuracy in decoding.

All variants can similarly be applied to determine the lengths lₙ of the gaps G between first message carrier bursts B.

The disclosed subject-matter is not restricted to the specific embodiments described in detail herein, but encompasses all variants, combinations and modifications thereof that fall within the framework of the appended claims.

## Claims

1. A method for transmitting an arbitrary cross-protocol message (M_{c}) from a first communication device (C₁), which is configured to transmit first messages (M₁) according to a first communication protocol in a first frequency channel, to a second communication device (C₂), which is configured to receive second messages (M₂) according to a second communication protocol in a second frequency channel overlapping the first frequency channel,
wherein each first message (M₁) is transmitted as a carrier burst (B) modulated according to a first modulation type and each second message (M₂) is transmitted as a carrier burst (B) modulated according to a second modulation type differing from the first modulation type, the method comprising:
in the first communication device (C₁),
encoding the cross-protocol message (M₁) by a series (S) of durations, adding a characteristic preamble (P) of durations to said series (S), and
transmitting a sequence (Q) of first message carrier bursts (B) the lengths (lₙ) of which and/or of gaps (G) between which correspond to the durations in said series (S);
in the second communication device (C₂),
receiving said sequence (Q) and, upon detection of said preamble (P) by means of received signal strength measurements, determining the lengths (lₙ) of the subsequent first message carrier bursts (B) and/or of the gaps (G) therebetween by means of received signal strength measurements,
reconstructing the series (S) of durations from said determined lengths (lₙ), and
decoding the cross-protocol message (M_{c}) from the reconstructed series (S).

2. The method according to claim 1, wherein each duration in said series (S) of durations matches one of a set of 4 different predetermined durations.

3. The method according to claim 1, wherein each duration in said series (S) of durations matches one of a set of 16 different predetermined durations.

4. The method according to any one of claims 1 to 3, wherein, in case only the lengths (lₙ) of the first message carrier bursts (B) in said sequence (S) correspond to the durations in said series (S) of durations, the gaps (G) between the first message carrier bursts (B) in said sequence (S) have one and the same predetermined length (l_{G}).

5. The method according to any one of claims 1 to 4, wherein said cross-protocol message (M_{c}) comprises a header (H), payload data (Y) and an optional checksum (K).

6. The method according to any one of claims 1 to 5, wherein the first communication protocol is one of the standards IEEE 802.11, IEEE 802.15.4, Bluetooth, and Bluetooth Low Energy and the second communication protocol is a different one of the standards IEEE 802.11, IEEE 802.15.4, Bluetooth, and Bluetooth Low Energy.

7. A communication device for transmitting an arbitrary cross-protocol message (M_{c}), which communication device (C₁) is configured to transmit first messages (M₁) according to a first communication protocol in a first frequency channel, wherein each first message (M₁) is transmitted as a carrier burst (B) modulated according to a first modulation type,
**characterised in that**
the communication device (C₁) is further configured to
- encode the cross-protocol message (M_{c}) by a series (S) of durations,
- add a characteristic preamble (P) of durations to said series (S), and
- transmit a sequence (Q) of first message carrier bursts (B) the lengths (lₙ) of which and/or of gaps (G) between which correspond to the durations in said series (S) .

8. The communication device according to claim 7, wherein each duration in said series (S) of durations matches one of a set of 4 different predetermined durations.

9. The communication device according to claim 7, wherein each duration in said series (S) of durations matches one of a set of 16 different predetermined durations.

10. The communication device according to any one of claims 7 to 9, wherein, in case only the lengths (lₙ) of the first message carrier bursts (B) in said sequence (Q) correspond to the durations in said series (S) of durations, the gaps (G) between the first message carrier bursts (B) in said sequence (Q) have one and the same predetermined length (l_{G}).

11. The communication device according to any one of claims 7 to 10, wherein said cross-protocol message (M_{c}) comprises a header (H), payload data (Y) and an optional checksum (K) .

12. A communication device for receiving an arbitrary cross-protocol message (M_{c}), which communication device (C₂) is configured to receive second messages (M₂) according to a second communication protocol in a second frequency channel, wherein each second message (M₂) is transmitted as a carrier burst (B) modulated according to a second modulation type,
**characterised in that**
the communication device (C₂) comprises a received signal strength measurement unit (6) and is further configured to
- receive a sequence (S) of first message carrier bursts (B) modulated according to a first modulation type differing from the second modulation type, the lengths (lₙ) of which first message carrier bursts (B) and/or of gaps therebetween correspond to durations in a series (S) by which the cross-protocol message (M_{c}) has been encoded and to which a characteristic preamble (P) of durations has been added,
- determine, upon detection of said preamble (P) by means of received signal strength measurement, the lengths (lₙ) of the subsequent first message carrier bursts (B) and/or of the gaps (G) therebetween by means of received signal strength measurement,
- reconstruct the series (S) of durations from said determined lengths (lₙ), and
- decode the cross-protocol message (M_{c}) from the reconstructed series (S).

13. The communication device according to claim 12, wherein each duration in said series (S) of durations matches one of a set of 4 different predetermined durations.

14. The communication device according to claim 12, wherein each duration in said series (S) of durations matches one of a set of 16 different predetermined durations.

15. The communication device according to any one of claims 12 to 14, wherein said cross-protocol message (M_{c}) comprises a header (H), payload data (Y) and an optional checksum (K) .

## Patentansprüche

1. Verfahren zum Übertragen einer beliebigen protokollübergreifenden Nachricht (M_{c}) von einem ersten Kommunikationsgerät (C₁), das dazu ausgebildet ist, erste Nachrichten (M₁) gemäß einem ersten Kommunikationsprotokoll in einem ersten Frequenzkanal an ein zweites Kommunikationsgerät (C₂) zu senden, welches dazu ausgebildet ist, zweite Nachrichten (M₂) gemäß einem zweiten Kommunikationsprotokoll in einem zweiten Frequenzkanal zu empfangen, der den ersten Frequenzkanal überlappt,
wobei jede erste Nachricht (M₁) als Trägerburst (B) gesendet wird, der gemäß einer ersten Modulationsart moduliert ist, und jede zweite Nachricht (M₂) als Trägerburst (B) gesendet wird, der gemäß einer zweiten Modulationsart moduliert ist, die sich von der ersten Modulationsart unterscheidet, wobei das Verfahren umfasst:
im ersten Kommunikationsgerät (C₁),
Codieren der protokollübergreifenden Nachricht (M₁) durch eine Folge (S) von Zeitabschnitten, Hinzufügen einer charakteristischen Präambel (P) von Zeitabschnitten zur Folge (S), und
Übertragen einer Sequenz (Q) von ersten Nachrichten-Trägerbursts (B), wobei die Längen (lₙ) dieser und/oder von Lücken (G) zwischen diesen den Zeitabschnitten in der genannten Folge (S) entsprechen;
im zweiten Kommunikationsgerät (C₂),
Empfangen der genannten Sequenz (Q) und, bei Detektion der genannten Präambel (P) mithilfe von Empfangssignalstärkenmessungen, Ermitteln der Längen (lₙ) der nachfolgenden ersten Nachrichten-Trägerbursts (B) und/oder der Lücken (G) dazwischen mithilfe von Empfangssignalstärkenmessungen,
Rekonstruieren der Folge (S) von Zeitabschnitten aus den genannten ermittelten Längen (lₙ), und
Decodieren der protokollübergreifenden Nachricht (M_{c}) aus der rekonstruierten Folge (S).

2. Verfahren nach Anspruch 1, wobei jeder Zeitabschnitt in der genannten Folge (S) von Zeitabschnitten einem Zeitabschnitt aus einem Satz von 4 verschiedenen vorgegebenen Zeitabschnitten entspricht.

3. Verfahren nach Anspruch 1, wobei jeder Zeitabschnitt in der genannten Folge (S) von Zeitabschnitten einem Zeitabschnitt aus einem Satz von 16 verschiedenen vorgegebenen Zeitabschnitten entspricht.

4. Verfahren nach einem der Ansprüche 1 bis 3, wobei, falls nur die Längen (lₙ) der ersten Nachrichten-Trägerbursts (B) in der genannten Sequenz (S) den Zeitabschnitten in der genannten Folge (S) von Zeitabschnitten entsprechen, die Lücken (G) zwischen den ersten Nachrichten-Trägerbursts (B) in der genannten Sequenz (S) ein und dieselbe vorgegebene Länge (l_{G}) aufweisen.

5. Verfahren nach einem der Ansprüche 1 bis 4, wobei die protokollübergreifende Nachricht (M_{c}) einen Header (H), Nutzdaten (Y) und eine optionale Prüfsumme (K) umfasst.

6. Verfahren nach einem der Ansprüche 1 bis 5, wobei das erste Kommunikationsprotokoll nach einem der Standards IEEE 802.11, IEEE 802.15.4, Bluetooth und Bluetooth Low Energy und das zweite Kommunikationsprotokoll nach einem anderen der Standards IEEE 802.11, IEEE 802.15.4, Bluetooth und Bluetooth Low Energy ist.

7. Kommunikationsgerät zum Übertragen einer beliebigen protokollübergreifenden Nachricht (M_{c}), wobei das Kommunikationsgerät (C₁) dazu ausgebildet ist, erste Nachrichten (M₁) gemäß einem ersten Kommunikationsprotokoll in einem ersten Frequenzkanal zu übertragen, wobei jede erste Nachricht (M₁) als Trägerburst (B) übertragen wird, der gemäß einer ersten Modulationsart moduliert ist,
**dadurch gekennzeichnet, dass**
das Kommunikationsgerät (C₁) ferner ausgebildet ist zum
- Codieren der protokollübergreifenden Nachricht (M_{c}) durch eine Folge (S) von Zeitabschnitten,
- Hinzufügen einer charakteristischen Präambel (P) von Zeitabschnitten zur genannten Folge (S), und
- Übertragen einer Sequenz (Q) von ersten Nachrichten-Trägerbursts (B), wobei die Längen (lₙ) dieser und/oder von Lücken (G) zwischen diesen den Zeitabschnitten in der genannten Folge (S) entsprechen.

8. Kommunikationsgerät nach Anspruch 7, wobei jeder Zeitabschnitt in der genannten Folge (S) von Zeitabschnitten einem Zeitabschnitt aus einem Satz von 4 verschiedenen vorgegebenen Zeitabschnitten entspricht.

9. Kommunikationsgerät nach Anspruch 7, wobei jeder Zeitabschnitt in der genannten Folge (S) von Zeitabschnitten einem Zeitabschnitt aus einem Satz von 16 verschiedenen vorgegebenen Zeitabschnitten entspricht.

10. Kommunikationsgerät nach einem der Ansprüche 7 bis 9, wobei, falls nur die Längen (lₙ) der ersten Nachrichten-Trägerbursts (B) in der genannten Sequenz (Q) den Zeitabschnitten in der genannten Folge (S) von Zeitabschnitten entsprechen, die Lücken (G) zwischen den ersten Nachrichten-Trägerbursts (B) in der genannten Sequenz (Q) ein und dieselbe vorgegebene Länge (l_{G})aufweisen.

11. Kommunikationsgerät nach einem der Ansprüche 7 bis 10, wobei die protokollübergreifende Nachricht (M_{c}) einen Header (H), Nutzdaten (Y) und eine optionale Prüfsumme (K) umfasst.

12. Kommunikationsgerät zum Empfangen einer beliebigen protokollübergreifende Nachricht (M_{c}), wobei das Kommunikationsgerät (C₂) dazu ausgebildet ist, zweite Nachrichten (M₂) gemäß einem zweiten Kommunikationsprotokoll in einem zweiten Frequenzkanal zu empfangen, wobei jede zweite Nachricht (M₂) als Trägerburst (B) übertragen wird, der gemäß einer zweiten Modulationsart moduliert ist,
**dadurch gekennzeichnet, dass**
das Kommunikationsgerät (C₂) eine Empfangssignalstärke-Messeinheit (6) umfasst und ferner ausgebildet ist zum
- Empfangen einer Sequenz (S) von ersten Nachrichten-Trägerbursts (B), die gemäß einer ersten Modulationsart moduliert sind, welche sich von der zweiten Modulationsart unterscheidet, wobei die Längen (lₙ) der ersten Nachrichten-Trägerbursts (B) und/oder Lücken dazwischen Zeitabschnitten in einer Folge (S) entsprechen, mithilfe welcher die protokollübergreifende Nachricht (M_{c}) codiert wurde und zu welcher eine charakteristische Präambel (P) von Zeitabschnitten hinzugefügt wurde,
- Ermitteln, bei Detektion der genannten Präambel (P) mithilfe von Empfangssignalstärkenmessung, der Längen (lₙ) der nachfolgenden ersten Nachrichten-Trägerbursts (B) und/oder der Lücken (G) dazwischen mithilfe von Empfangssignalstärkenmessung,
- Rekonstruieren der Folge (S) von Zeitabschnitten aus den genannten ermittelten Längen (lₙ), und
- Decodieren der protokollübergreifenden Nachricht (M_{c}) aus der rekonstruierten Folge (S).

13. Kommunikationsgerät nach Anspruch 12, wobei jeder Zeitabschnitt in der genannten Folge (S) von Zeitabschnitten einem Zeitabschnitt aus einem Satz von 4 verschiedenen vorgegebenen Zeitabschnitten entspricht.

14. Kommunikationsgerät nach Anspruch 12, wobei jeder Zeitabschnitt in der genannten Folge (S) von Zeitabschnitten einem Zeitabschnitt aus einem Satz von 16 verschiedenen vorgegebenen Zeitabschnitten entspricht.

15. Kommunikationsgerät nach einem der Ansprüche 12 bis 14, wobei die genannte protokollübergreifende Nachricht (M_{c}) einen Header (H), Nutzdaten (Y) und eine optionale Prüfsumme (K) umfasst.

## Revendications

1. Procédé de transmission d'un message inter-protocoles (M_{c}) arbitraire à partir d'un premier dispositif de communication (C₁), qui est conçu pour transmettre des premiers messages (M₁) selon un premier protocole de communication dans un premier canal de fréquences, à un second dispositif de communication (C₂), qui est conçu pour recevoir des seconds messages (M₂) selon un second protocole de communication dans un second canal de fréquences chevauchant le premier canal de fréquences,
dans lequel chaque premier message (M₁) est transmis sous forme d'une rafale porteuse (B) modulée selon un premier type de modulation et chaque second message (M₂) est transmis sous forme d'une rafale porteuse (B) modulée selon un second type de modulation différent du premier type de modulation, le procédé comprenant :
dans le premier dispositif de communication (C₁),
le codage du message inter-protocoles (M₁) par une série (S) de durées, l'ajout d'un préambule (P) caractéristique de durées à ladite série (S), et
la transmission d'une séquence (Q) de rafales porteuses (B) de premier message, les longueurs (lₙ) des rafales porteuses (B) et/ou des intervalles (G) entre elles correspondant aux durées dans ladite série (S) ;
dans le second dispositif de communication (C₂),
la réception de ladite séquence (Q) et, lors de la détection dudit préambule (P) au moyen de mesures de puissance de signal reçu, la détermination des longueurs (lₙ) des rafales porteuses (B) du premier message suivant et/ou des intervalles (G) entre elles au moyen de mesures de puissance du signal reçu,
la reconstruction de la série (S) de durées à partir desdites longueurs (lₙ) déterminées, et
le décodage du message inter-protocoles (M_{c}) à partir de la série (S) reconstruite.

2. Procédé selon la revendication 1, dans lequel chaque durée dans ladite série (S) de durées correspond à une durée d'un ensemble de 4 durées prédéterminées différentes.

3. Procédé selon la revendication 1, dans lequel chaque durée dans ladite série (S) de durées correspond à une durée d'un ensemble de 16 durées prédéterminées différentes.

4. Procédé selon l'une quelconque des revendications 1 à 3, dans lequel, dans le cas où uniquement les longueurs (lₙ) des rafales porteuses (B) de premier message dans ladite séquence (S) correspondent aux durées dans ladite série (S) de durées, les intervalles (G) entre les rafales porteuses (B) de premier message dans ladite séquence (S) ont une seule et même longueur (l_{G})prédéterminée.

5. Procédé selon l'une quelconque des revendications 1 à 4, dans lequel ledit message inter-protocoles (M_{c}) comprend un en-tête (H), une donnée de charge utile (Y) et une somme de contrôle (K) facultative.

6. Procédé selon l'une quelconque des revendications 1 à 5, dans lequel le premier protocole de communication est un protocole de l'une des normes IEEE 802.11, IEEE 802.15.4, Bluetooth et Bluetooth à basse consommation et le second protocole de communication est un protocole différent parmi l'une des normes IEEE 802.11, IEEE 802.15.4, Bluetooth et Bluetooth à basse consommation.

7. Dispositif de communication permettant la transmission d'un message inter-protocoles (M_{c}) arbitraire, lequel dispositif de communication (C₁) est conçu pour transmettre des premiers messages (M₁) selon un premier protocole de communication dans un premier canal de fréquences, dans lequel chaque premier message (M₁) est transmis sous forme d'une rafale porteuse (B) modulée selon un premier type de modulation,
**caractérisé en ce que**
le dispositif de communication (C₁) est en outre conçu pour
- coder le message inter-protocoles (M_{c}) par une série (S) de durées,
- ajouter un préambule (P) caractéristique de durées à ladite série (S), et
- transmettre une séquence (Q) de rafales porteuses (B) de premier message, les longueurs (lₙ) des rafales porteuses (B) et/ou des intervalles (G) entre elles correspondant aux durées dans ladite série (S).

8. Dispositif de communication selon la revendication 7, dans lequel chaque durée dans ladite série (S) de durées correspond à une durée d'un ensemble de 4 durées prédéterminées différentes.

9. Dispositif de communication selon la revendication 7, dans lequel chaque durée dans ladite série (S) de durées correspond à une durée d'un ensemble de 16 durées prédéterminées différentes.

10. Dispositif de communication selon l'une quelconque des revendications 7 à 9, dans lequel, dans le cas où uniquement les longueurs (lₙ) des rafales porteuses (B) du premier message dans ladite séquence (Q) correspondent aux durées dans ladite série (S) de durées, les intervalles (G) entre les rafales porteuses (B) de premier message dans ladite séquence (S) ont une seule et même longueur (l_{G})prédéterminée.

11. Dispositif de communication selon l'une quelconque des revendications 7 à 10, dans lequel ledit message inter-protocoles (M_{c}) comprend un en-tête (H), une donnée de charge utile (Y) et une somme de contrôle (K) facultative.

12. Dispositif de communication permettant la réception d'un message arbitraire inter-protocoles (M_{c}), lequel dispositif de communication (C₂) est conçu pour recevoir des seconds messages (M₂) selon un second protocole de communication dans un second canal de fréquences, dans lequel chaque second message (M₂) est transmis sous forme d'une rafale porteuse (B) modulée selon un second type de modulation,
**caractérisé en ce que**
le dispositif de communication (C₂) comprend une unité de mesure de puissance de signal reçu (6) et est en outre conçu pour
- recevoir une séquence (S) de rafales porteuses (B) de premier message modulé selon un premier type de modulation différent du second type de modulation, dont les longueurs (lₙ) des rafales porteuses (B) de premier message et/ou des intervalles entre elles correspondent aux durées dans une série (S) par laquelle le message inter-protocoles (M_{c}) a été codé et à laquelle un préambule (P) caractéristique de durées a été ajouté,
- déterminer, lors de la détection dudit préambule (P), au moyen de mesure de puissance de signal reçu, les longueurs (lₙ) des rafales porteuses (B) du premier message suivant et/ou des intervalles (G) entre elles au moyen de mesure de puissance du signal reçu,
- reconstruire la série (S) de durées à partir desdites longueurs (lₙ) déterminées, et
- décoder le message (M_{c}) inter-protocoles à partir de la série (S) reconstruite.

13. Dispositif de communication selon la revendication 12, dans lequel chaque durée dans ladite série (S) de durées correspond à une durée d'un ensemble de 4 durées prédéterminées différentes.

14. Dispositif de communication selon la revendication 12, dans lequel chaque durée dans ladite série (S) de durées correspond à une durée d'un ensemble de 16 durées prédéterminées différentes.

15. Dispositif de communication selon l'une quelconque des revendications 12 à 14, dans lequel ledit message inter-protocoles (M_{c}) comprend un en-tête (H), une donnée de charge utile (Y) et une somme de contrôle (K) facultative.
